Europäisches Patentamt

European Patent Office

Office européen des brevets

(11) Veröffentlichungsnummer: **0 016 238**
**B1**

(12) **EUROPÄISCHE PATENTSCHRIFT**

(45) Veröffentlichungstag der Patentschrift: 30.01.85

(21) Anmeldenummer: 79100900.4

(22) Anmeldetag: 24.03.79

(51) Int. Cl.⁴: **G 01 G 3/08,** G 01 G 7/02,
F 16 F 3/00

(54) **Massen- und Kraftmessgerät.**

(43) Veröffentlichungstag der Anmeldung:
**01.10.80 Patentblatt 80/20**

(45) Bekanntmachung des Hinweises
auf die Patenterteilung:
**30.01.85 Patentblatt 85/05**

(84) Benannte Vertragsstaaten:
**BE CH DE FR GB IT NL SE**

(56) Entgegenhaltungen:
**CH-A- 591 685**
**DE-A-2 040 987**
**DE-A-2 614 766**
**DE-B-1 294 055**
**FR-A-2 107 867**
**FR-A-2 112 216**
**FR-A-2 356 918**
**GB-A- 777 941**
**US-A-4 072 202**

(73) Patentinhaber: **Wirth Gallo Patent AG**
**Sonnenbergstrasse 55**
**CH-8032 Zürich (CH)**

(72) Erfinder: **Gallo, Mario, Dr.**
**Krönleinstrasse 1**
**CH-8044 Zürich (CH)**
Erfinder: **Wirth, Johannes**
**Sonnenbergstrasse 55**
**CH-8032 Zürich (CH)**

Courier Press, Leamington Spa, England.

## Beschreibung

Die vorliegende Erfindung bezieht sich auf ein Massen- und Kraftmessgerät mit einem Gestell, einem mittels einer aus mindestens zwei, in zwei mindestens annähernd parallelen, übereinander liegenden Ebenen angeordneten Elementen bestehenden Parallelführung parallel und senkrecht geführten Lastträger, einem starren Mess-System und einem Uebertragungsorgan, das einen Teil des Gewichtes der zu messenden Masse oder der zu messenden Kraft auf das Mess-System überträgt. Unter einem starren Mess-System versteht man ein Mess-System, dessen Lasteingang unter Belastung nur virtuelle Bewegungen ausführt. Die zu messende Grösse muss in manchen Fällen über mehrere Elemente stark reduziert werden, bevor sie auf das Mess-System einwirkt. Ein Gerät dieser Gattung ist z.B. in der nicht vorveröffentlichten US—A—4.240.289. beschrieben Viele Mess-Systeme, wie z.B. piezo-elektrische Messgeräte oder Saitenwaagen, lassen nur Eingangskräfte zu, die innerhalb eines begrenzten Bereiches liegen. Müssen grössere Lasten gemessen werden, so müssen entsprechend dimensionierte Untersetzungselemente, z.B. starke Hebel, vorgesehen werden. Gleichzeitig muss die Parallelführung, die zum Beispiel aus Lenkern und Gelenken besteht, ebenfalls so dimensioniert werden, dass sie grosse Lastern ertragen kann. Der entsprechende Aufwand kann den Bau solcher Geräte erheblich verteuern.

Die der Erfindung zu Grunde liegende Aufgabe besteht darin, Mittel zu schaffen, die eine Untersetzung der zu messenden Grösse auch bei grösseren Lasten, z.B. bei Massen von 300 kg, ohne übertriebenen Kostenaufwand erlauben.

Erfindungsgemäss wird dies dadurch verwirklicht, dass die Parallelführung aus Blattfedern besteht, die im Gestell und im Lastträger eingepsannt sind und dass das Uebertragungsorgan elastisch ausgeführt ist. Bei bekannten Parallelführungen ist die horizontale Lage des Lastträgers bezüglich des Gestelles stets statisch bestimmt. Die erfindungsgemässe Verwendung von Blattfedern für die Parallelführung erlaubt es, diese notwendige Eigenschaft der Parallelführung zu erhalten und führt zu keiner statischen Ueberstimmung des Lastträgers.

In der beiliegenden Zeichnung sind Ausführungsbeispiele des Erfindungsgegenstandes schematisch dargestellt. Es zeigen:
     Fig. 1, 2 ein erstes Ausführungsbeispiel,
     Fig. 3, 4 ein zweites Ausführungsbeispiel,
     Fig. 5, 6 ein drittes Ausführungsbeispiel,
     Fig. 7, 8 je ein Ausführungsbeispiel mit verschiedenen Uebertragungsorgan,
     Fig. 9—12 je eine Variante der Anordnung der die Parallelführung bildenden Blattfedern.

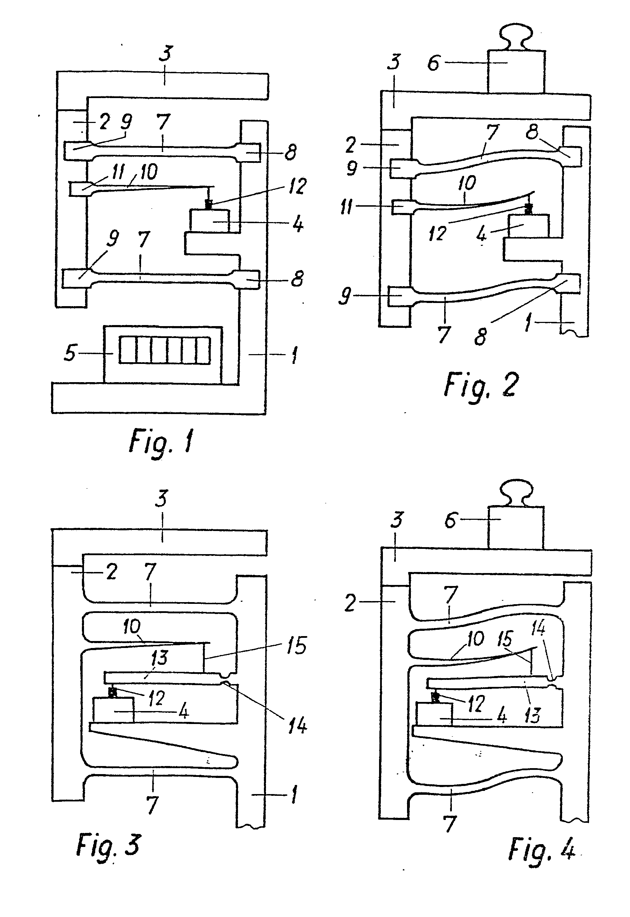

In Fig. 1 ist ein Massenmessgerät, d.h. eine Waage, schematisch dargestellt, das in bekannter Weise ein Gestell 1, einen Lastträger 2, eine Waagschale 3, ein am Gestell 1 befestigtes Mess-System 4 und eine am letzteren angeschlossene Auswertungs- und Anziegevorrichtung 5 aufweist. Das Mess-System 4 ist ein starres Mess-System, z.B. ein Massenmessgeber bekannter Bauart mit zwei schwingenden Saiten, oder ein piezoelektrischer Fühler, Die durch das Gewicht der zu ermittelnden Masse 6 bewirkten Frequenzvariationen werden in der Auswertungs- und Anzeigevorrichtung 5 ausgewertet und die daraus abgeleitete Grösse dieser Masse 6 mit passenden Einheiten angezeigt.

Der Lastträger 2 ist dem Gestell 1 gegenüber parallel und senkrecht geführt. Die Parallelführung besteht aus zwei Blattfedern 7, die übereinander in zwei mindestens annähernd parallelen Ebenen liegen. Die Blattfedern 7 sind bei 8 im Gestell 1 und bei 9 im Lastträger 2 eingespannt. Ferner ist ein Uebertragungsorgan 10, das ebenfalls aus einer Blattfeder besteht, bei 11 im Lastträger 2 eingespannt. Das andere Ende des Uebertragunsorganes 10 wirkt über eine Stelze 12 auf das Mess-System 4, so dass es auf dieses Mess-System 4 nur senkrechte Kräfte überträgt.

Unter der Wirkung des Gewichtes der zu messenden Masse 6 (Fig. 2) werden die Blattfedern 7, deren Kennlinie entsprechend der vorgesehenen Anwendung gewählt worden ist, im wesentlichen auf Biegung beansprucht, sie verformen sich S-förmig. Der Lastträger 2 mit der Lastschale 3 senkt sich und die das Uebertragungsorgan 10 bildende Blattfeder wird elastisch verformt, da die Höhenlage ihres rechten Endes von der Stelze 12 bestimmt wird. Die Blattfedern 7 sind derart dimensioniert, dass sie den Hauptteil der Last aufnehmen. Der restliche, die sogenannte Messkraft bildende Anteil wird vom Uebertragungsorgan 10 aufgenommen und auf das Mess-System 4 übertragen. Bei passender Wahl der Blattfedern 7 und des Uebertragungsorganes 10, ist die auf das Mess-System 4 wirkende Kraft zum Gewicht der Masse 6 proportional. Da Blattfedern in ihrer eigenen Ebene, in vorliegendem Ausführungsbeispiel in horizontalen Ebenen, vollständig hart sind, bleibt die horizontale Lage des Lastträgers 2 bezüglich des Gestelles 1 stets statisch bestimmt.

Eine praktische Ausführung eines solchen Massenmessgerätes könnte beispielsweise folgende Daten aufweisen:

| | |
|---|---|
| Länge der Blattfedern 7 | 100 mm |
| Senkrechte Einfederung | 0,3 mm |
| Von den Blattfedern 7 aufgenommener Lastanteil | 99% |
| Vom Uebertragungsorgan 10 aufgenommener Lastanteil | 1% |
| Maximallast | 3000 N |
| Maximale Messkraft | 30 N |

In Fig. 3, 4 ist ein weiteres Ausführungsbeispiel dargestellt, wobei nur die zur Erklärung der Unterschiede zur Ausführung gemäss Fig. 1, 2 notwendigen Elemente dargestellt wurden. Die Blattfedern 7 und die das Uebertragungsorgan 10 bildende Blattfeder bestehen aus einem Stück mit dem Gestell 1 und dem Lastträger 2.

Diese Bauart ist bekanntlich eine Form von Einspannung, zumindest was die Wirkung auf die Blattfedern anbetrifft. Zwischen dem Uebertragunsorgan 10 und der Stelze 12 des Mess-Systems 4 ist ein starrer Hebel 13 eingeschaltet, der mittels eines elastischen Gelenkes 14 auf dem Gestell 1 schwenkbar gelagert ist. Das rechte Ende des Uebertragunsorganes 10 wirkt über eine weitere Stelze 15 auf diesen Hebel 13. Diese Ausführung erlaubt es den virtuellen Weg der Spitze des Hebels 13 der senkrechten Einfederung des Lastträgers 2 gegenüber zu vergrössern. Bei einer Einfederung von z.B. 0,3 mm wäre dieser virtuelle Weg gleich 1,5 mm. Ein solcher Hebel 13 könnte in jeder Ausführung der Erfindung vorgesehen werden. Der Einfachheit halber ist es nur im Zusammenhang mit Fig. 3—4 dargestellt und erläutert worden.

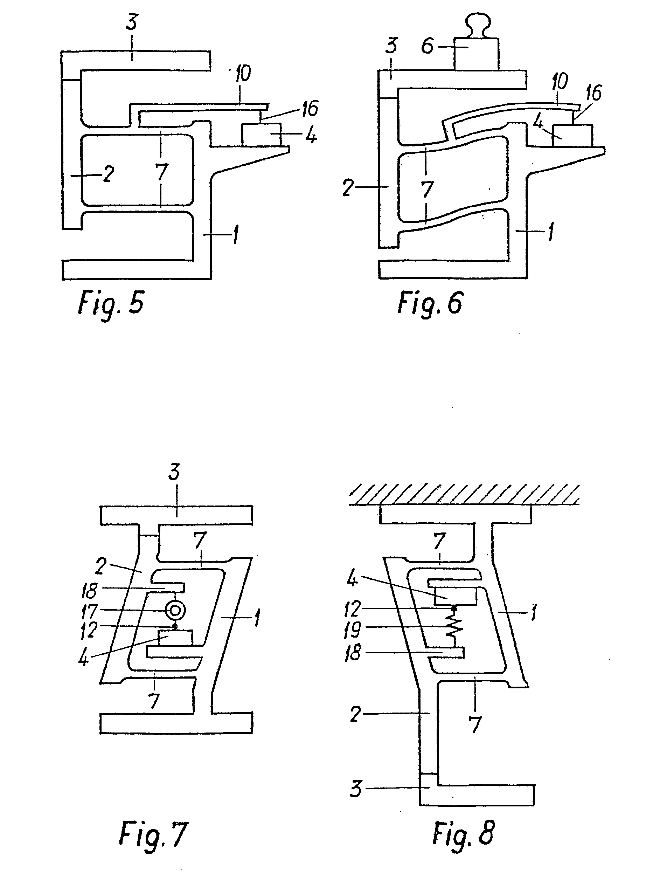

Das Ausführungsbeispiel der Fig. 5, 6 unterscheidet sich vom Ausführungsbeispiel der Fig. 3, 4 dadurch, dass das elastische Uebertragunsorgan 10 aus einem Stück mit der oberen Blattfeder 7 besteht. Das Ganze derart, dass das Uebertragungsorgan 10 auf einen die Stelze 12 ersetzenden Draht 16 eine Zug ausübt. Bei Belastung des Lastträgers 2 wird das linke Ende des Uebertragungsorganes 10 um die halbe Einfederung des Lastträgers 2 nach unten verschoben. Gleichzeitig wird es im Uhrzeigersinn leicht verdreht.

In den Ausführungsbeispielen nach Fig. 1—6 ist ein Uebertragungsorgan 10 dargestellt, das aus einer Blattfeder besteht. Andere Arten von elastischen Uebertragunsorganen können auch verwendet werden. In Fig. 7 besteht das Uebertragunsorgan aus einer ringförmigen Feder 17. Sie ist zwischen der Stelze 12 und einem Arm 18 des Lastträgers 2 angeordnet. In Fig. 8 ist eine weitere Variante dargestellt, bei welcher das Uebertragunsorgan aus einer von der Waagschale 3 auf Zug beanspruchte Spiralfeder 19 besteht.

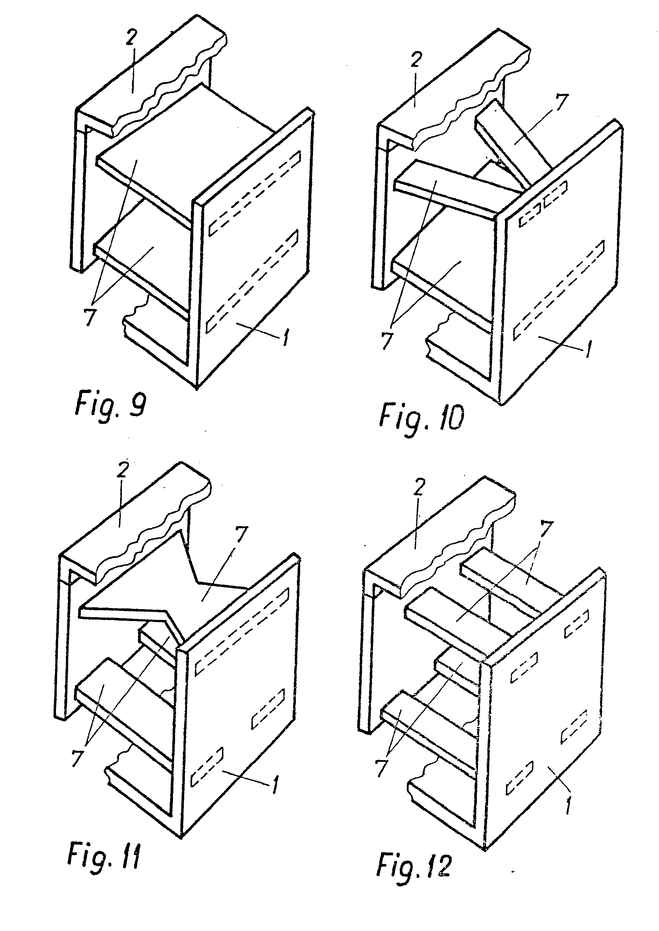

Wie bereits erwähnt, besteht die Parallelführung des Lastträgers aus Blattfedern 7. Fig. 9—12 zeigen schematisch die verschiedenen Kombinationen von breiten und schmaleren Blattfedern, die zur Bildung der Parallelführung vorgesehen werden können. Es können zwei breite Blattfedern (Fig. 9), eine breite, untere und zwei schmale, V-förmig angeordnete Blattfedern (Fig. 10), eine breite, im wesentlichen X-förmige, obere und zwei schmale, untere Blattfedern (Fig. 11) oder auch vier schmale Blattfedern (Fig. 12) zwischen dem Gestell 1 und dem Lastträger 2 vorgesehen werden. Die Wahl der passenden Konstruktion hängt von der Anwendung, die im allgemeinen das gewünschte Verhalten der Feder, d.h. ihre Kennlinie bestimmt, ab.

In allen Anordnungen der Fig. 9—12 liegen die Blattfedern in zwei mindestens annähernd parallelen, übereinander liegenden Ebenen. Bei unbelastetem Messgerät sind diese Ebenen im wesentlichen horizontal. Abweichungen des Parallelismus können bis 10% betragen.

In den Ausführungsbeispielen sind Massenmessgeräte dargestellt. Ausführungen als Kraftmessgeräte unterscheiden sich von diesen lediglich darin, dass an Stelle einer Waagschale, eine passende Kraftaufnahmestelle am Lastträger 2 vorgesehen ist.

## Patentansprüche

1. Massen- und Kraftmessgerät mit einem Gestell (1), einem mittels einer aus mindestens zwei, in zwei mindestens annähernd parallelen, übereinander liegenden Ebenen angeordneten Elementen (7) bestehenden Parallelführung parallel und senkrecht geführten Lastträger (2), einem starren Mess-System (4) und einem Uebertragungsorgan (10), das einen Teil des Gewichtes der zu messenden Masse (6) oder der zu messenden Kraft auf das Mess-System (4) überträgt, dadurch gekennzeichnet, dass die Parallelführung aus Blattfedern (7) besteht, die im Gestell (1) und im Lastträger (2) eingespannt sind und dass das Uebertragungsorgan (10) elastisch ausgeführt ist.

2. Massen- und Kraftmessgerät nach Anspruch 1, dadurch gekennzeichnet, dass das Uebertragungsorgan (10) an einem seiner Enden im Lastträger (2) eingespannt ist und dass sein anderes Ende über eine Stelze (12) auf das Mess-System (4) einwirkt.

3. Massen- und Kraftmessgarät nach Anspruch 1, dadurch gekennzeichnet, dass das Uebertragungsorgan (10) aus einem Stück mit der oberen Blattfeder (7) der Parallelführung besteht und dass sein Ende über ein Zugorgan (16) auf das Mess-System (4) einwirkt.

4. Massen- und Kraftmessgerät nach Anspruch 1, dadurch gekennzeichnet, dass das Uebertragungsorgan (10) zwischen dem Lastträger (2) und einer auf das Mess-System (4) wirkende Stelze (12) angeordnet ist und aus einer Ringfeder (17) oder einer Spiralfeder (19) besteht.

5. Massen- und Kraftmessgerät nach Anspruch 2 oder 4 dadurch gekennzeichnet, dass zwischen dem Ende des Uebertragungsorganes (10) und der Stelze (12) ein auf dem Gestell (1) schwenkbar gelagerter Hebel (13) vorgesehen ist.

## Revendications

1. Dispositif de mesure des masses et des forces comprenant un bâti (1), un support de charge (2) guidé parallèlement â luimême et verticalement par au moins deux organes de guidage montés les uns au-dessus des autres dans des plans pratiquement parallèles, un système de mesure rigide (4) et un organe de transmission transmettant une partie de poids de la masse ou de la force à mesurer au système de mesure (4), caractérisé en ce que les organes de guidage sont constitués par des ressorts plats (7) encastrés dans le bâti (1) et dans le support de charge (2) et en ce que l'organe de transmission (10) est élastique.

2. Dispositif de mesure des masses et des forces selon la revendication 1, caractérisé en ce que l'organe de transmission (10) est encastré à l'une de ses extrémités dans le support de charge (2) et que son extrémité libre agit sur le système de mesure (4) par l'entremise d'une tringle (12).

3. Dispositif de mesure des masses et des forces selon la revendication 1, caractérisé en ce que l'organe de transmission (10) est d'une pièce avec le ressort plat supérieur de guidage et en ce que son extrémité libre agit sur le système de mesure par l'entremise d'une organe de traction (16).

4. Dispositif de mesure des masses et des forces selon la revendication 1, caractérisé en ce que l'organe de transmission (10) est disposé entre le support de charge (2) et une tringle (12) agissant sur le système de mesure (4) et en ce qu'il est constitué par un ressort circulaire (17) ou un ressort spiral (19).

5. Dispositif de mesure des masses et des forces selon les revendications 2 ou 4, caractérisé en ce qu'entre l'extrémité de l'organe de transmission (10) et la tringle (12) est intercalé un levier pivotant (13) monté sur le bâti (1).

**Claims**

1. Mass and force meter with a frame (1), a load support (2) guided parallely and vertically by guiding means consisting of at least two elements (7) mounted each in one of two substantially parallel planes lying one above the other, a rigid measuring system (4) and a transmission element (10) transmitting a part of the weight or of the force to be measured to the measuring system (4), characterized in that the guiding means consist of flat springs (7) fitted in the frame (1) and in the load support (2) and that the transmission element (10) is made from a resilient material.

2. Mass and force meter according to claim 1, characterized in that the transmission element (10) is fitted at one end into the load support (2) and that its other end acts on the measuring system (4) by means of a rod (12).

3. Mass and force meter according to claim 1, characterized in that said transmission element (10) is integral with the upper flat spring (7) of the means for parallel and vertical guidance of the load support (2) and that its free end acts on the measuring system (4) by means of traction element (16).

4. Mass and force meter according to claim 1, characterized in that the transmission element (10) is mounted between the load support (2) and a rod (12) acting on the measuring system (4) and comprises a circular spring (17) or a helical spring (19).

5. Mass and force meter according to claims 2 to 4, characterized in that between the end of the transmission element (10) and the rod (12) a pivoting lever (13) articulated on the frame (1) is mounted.

Fig. 1

Fig. 2

Fig. 3

Fig. 4

Fig. 5

Fig. 6

Fig. 7

Fig. 8

2

Fig. 9

Fig. 10

Fig. 11

Fig. 12